# EUROPEAN PATENT SPECIFICATION

(11) **EP 3 256 011 B1**
(45) Date of publication and mention of the grant of the patent: **12.12.2018**
(21) Application number: 16712494.0
(22) Date of filing: 12.02.2016
(51) Int. Cl.: A23L 31/00, A23L 5/20

(54) **PROCESS FOR THE CLEANING OF EDIBLE MUSHROOMS**
VERFAHREN ZUR REINIGUNG ESSBARER PILZE
PROCEDE DE NETTOYAGE DE CHAMPIGNONS COMESTIBLES

(30) Priority: 13.02.2015 IT RN20150004
(43) Date of publication of application: 20.12.2017
(73) Proprietor: Aurea Center Srl, 37854 Pergine Valsugana (TN) (IT)
(72) Inventor: BRUGNARA, Andrea, 38057 Pergine Valsugana (IT); OREFICE, Gianni Rosario, 38057 Pergine Valsugana (IT); VANALLI, Marco, 24020 Scanzorosciate (IT)
(74) Representative: Busca, Andrea
(86) International application number: PCT/IB2016/050750
(87) International publication number: WO 2016/128934

(56) References cited:
- EP-A1- 0 506 548
- WO-A1-2014/181219
- CN-U- 201 986 607
- DE-A1- 2 502 131
- US-A- 4 085 233
- US-A- 5 409 713

## Description

The present invention concerns a process for cleaning mushrooms intended for human consumption of foreign elements. In particular, the process has been studied with particular reference to wild mushrooms, even more preferably of the boletaceae family (hereinafter called "boletus" for the sake of brevity), and even more preferably of the species called "boletus edulis". However, this does not exclude other applications, like for example with respect to cultivated mushrooms.

In the field of edible mushrooms, it is known that wild ones have much better and more highly prized organoleptic characteristics than cultivated ones. However, they are often infested by insects that are located inside the pulp, including mycetophilidae larvae. As well as these, there can be other impurities and foreign bodies, like for example topsoil, pine needles, moss, grass, multiresidual substances, etc.. Humans are unable to control and prevent these contaminations by foreign elements during the birth and growth of mushrooms, since wild mushrooms cannot be subjected to controlled cultivation.

Cultivated mushrooms are also not totally free from these problems, for example the topsoil is not completely removable with normal scrubbing processes.

The risk run by industries, especially for transformed products such as granulates, sauces or other, is the market withdrawal of large batches following official analyses that find the aforementioned problems.

Of course, the problem is contained by discarding the most contaminated mushrooms from the process, but this ends up excluding many organoleptically excellent mushrooms.

In this way, the industry ends up depending only on the level of cleaning of the batches of mushrooms that it manages to obtain as raw material to begin with. These batches, however, have characteristics that are also very different among themselves, for which reason the industry is unable to guarantee a product with constant values of consistency, smell and taste over time (let us think, for example, of processed products or risotto or pasta preparations), and even less so can it fulfil the demand of the market.

Prior art processes for the cleaning and preparation of mushrooms are disclosed in e.g., WO 2014/181219; EP 0 506 548; and US 4 085 233.

A preferred aim of the present invention is to totally or partially overcome the problems of the prior art.

Another preferred aim of the present invention is to provide a process for cleaning mushrooms intended for human consumption of foreign elements that ensures that the end product has appreciable and repeatable characteristics of smell, consistency and flavour.

Another further aim of the present invention is to provide a process that is adaptable to the state of contamination of the starting mushrooms.

A yet further aim of the present invention is to allow the industry to ensure that the market is supplied with constant amounts of processed product.

Another further aim of the present invention is to provide a process that ensures an appearance of the end product that is appreciated by the public, preferably similar to a normal dried mushroom.

According to a first general aspect thereof, the present invention concerns a process for cleaning mushrooms intended for human consumption of insoluble foreign elements. The invention has been made with particular reference to the extraction of foreign elements inside the pulp, but of course it also has a positive effect on the cleaning of external elements. The invention comprises the following steps:
- separation of the soluble parts from the mushrooms through the generation of an extract through solvent;
- cleaning the pulp of insoluble foreign elements
- reconstruction by combining the pulp, removed of the soluble elements and cleaned, with the extract.

The step of cleaning the pulp takes place at least during and/or after the generation of the extract.

The solutes are the noble elements of the mushroom, and contain flavours, smells, colour. By separating them, it is possible to intervene invasively on the pulp to also extract the undesired elements. Indeed, the invasive work can be functional for increasing the degree of extraction of the solutes, so that it can also be simultaneous or partially simultaneous with making the extract.

The mushroom reconstructed by combining the extract with the cleaned pulp has the advantage of being able to have repeatable organoleptic characteristics, since they depend on the amount of extract added.

Moreover, being able to clean any mushroom, irrespective of the degree of infestation, all discards are practically eliminated to the great benefit of the industry.

Finally, the process, by providing for a reconstruction of the mushroom, can have smell and flavour levels even more intense than the starting mushroom, since this depends on the amount of extract added to the pulp. The end product, despite having a practically unchanged fibrous structure, has a much more soluble aromatic component than the starting mushrooms, for which reason in making dishes like risotto or sauces, the impression on the palate is the same, but the mass of rice or sauce has an aroma that is stronger overall.

The inventors have found that a particularly effective cleaning step provides for the suspension of the pulp in a liquid medium, preferably water, to form a mixture, and the stressing of the mixture through at least one series of pressure variations that cause the foreign elements to come out.

The pressure variations, indeed, stress the pulp by dilating the cavities, such as the porosities, the gaps, the slits between the fibres, and the tunnels dug by the parasites, thus encouraging whatever is found inside to come out.

Said cleaning step preferably also comprises the removal from the mixture of the insoluble foreign elements that have come out from the pulp (for example by skimming and/or sieving and/or filtration) or the removal from the mixture of the treated pulp. The skimming or sieving can for example take place with the help of vibrations applied to the mixture. These can for example make the foreign elements emerge better.

Preferably, said variations comprise at least some pressure values below atmospheric pressure, for example they alternate maximum values with minimum values, where at least the lower values are below atmospheric pressure. Preferably, the pressure variations generate a pulsed stress, for the sake of simplicity called "pulsed vacuum". It should be noted that it is possible to use durations of the pulses, and/or times between one pulse and another, and/or pressure values that are fixed or variable.

The inventors have also found that another particularly effective cleaning step, to be adopted in addition or as an alternative to the previous one, provides for the suspension of the pulp in a liquid medium, preferably water, to form a mixture, and the bubbling through the mixture of a food gas or of a mixture of food gases (for example it is preferable to bubble at least nitrogen gas and/or carbon dioxide), where the bubbling of the gas causes the foreign elements to come out from the pulp in suspension.

This cleaning treatment is particularly effective against dead mycetophilidae larvae that are located in the pulp. The gas (especially nitrogen) indeed, "inflates" the larvae like small balloons, and having a tendency to rise, being volatile, leads them to float on the surface of the mixture.

Preferably, said step also comprises the removal from the mixture of the foreign elements that have come out from the pulp (for example by skimming and/or sieving and/or filtration) or the removal from the mixture of the treated pulp. The skimming or sieving can for example take place with the help of vibrations applied to the mixture. These for example can make the foreign elements emerge better.

The inventors have also found that another particularly effective cleaning step, to be adopted in addition or as an alternative to one or both of the previous ones, provides that the pulp, (preferably that removed of the soluble elements through the step of generating an extract), is placed in suspension in a solution comprising oxygenated water, to generate a mixture, for a predetermined time, where the reaction of the oxygenated water inside the pulp generates a propulsion effect that causes the foreign elements to come out.

Preferably, said suspension of the pulp in a solution comprising oxygenated water is at least partially after said separation step.

Even more preferably, the pulp is previously separated from the extract to be placed in suspension in the oxygenated water solution.

Said cleaning step also comprises the removal from the mixture of the insoluble foreign elements that have come out from the pulp (for example by skimming and/or sieving and/or filtration) or the removal from the mixture of the treated pulp. The skimming or sieving can for example take place with the help of vibrations applied to the mixture. These, for example, can make the foreign elements emerge better.

According to some preferred embodiments of the invention the step of generating the extract is at least partially simultaneous with the cleaning steps with pressure variation and/or bubbling, since the mixture to carry out one and/or other of these is obtained by placing the mushrooms and/or the pulp to be cleaned in said liquid medium that acts as a solvent to at least partially generate said extract.

Preferably, in the case in which both at least one cleaning step by pressure variation and at least one cleaning step by bubbling are applied, the first happens before the second.

If at least one cleaning step with oxygenated water is used, it is preferable for at least two parts of pulp to be kept in the mixture with oxygenated water for mutually different predetermined times, so as to undergo different amounts of bleaching.

Since the pulp, in the step of generating the extract, took on a substantially uniform colour, this allows the pulp to be bleached to mimic, respectively, the stalks (whiter) and the caps (less white) of the starting mushrooms.

According to a preferred general characteristic of the invention said reconstruction step comprises the step of subjecting the cleaned pulp to a drying process during which said extract is combined (preferably periodically) with the pulp (preferably by spraying but other soaking systems are not ruled out, preferably the selected combining system is such as to allow the amount of extract combined with the pulp to be controlled). In this way it is possible to easily control the degree of flavour returned to the pulp, (for example through the number of combining cycles and/or the amount of extract combined and/or the soaking time) and thus make the characteristics of the end product constant or personalise them. Finally, through the drying and combining of the solute it is also possible to control the consistency and the mass returned to the pulp.

In general, it should be observed that the process of the present invention is highly personalisable based on the level and type of contamination of the starting mushrooms to be processed. The personalisation can advantageously take place by providing for an initial step of analysis of the level and/or type of contamination of the starting mushrooms to be cleaned and assigning a number and/or type of washes to them, each coinciding with a cleaning step according to claims 2 and/or 3 and/or 4 or claims dependent thereupon, where said number and/or type is dependent on said level of contamination detected, said washes are then carried out on said mushrooms to be cleaned.

Such personalisation can easily be automated by providing for a predetermined number of assignable washing programs, each associated with a range of values identifying the degree and/or type of contamination.

The analysis and a consequent program can be associated with an entire batch of mushrooms. Or the mushrooms of a batch can be separated and grouped together in various groups with similar contamination characteristics, and each group can be automatically associated with a cleaning program. In this case, the analysis is preferably piece by piece; for example, analysis and separation of mushrooms and/or their pieces are continuous when transiting along a production line.

According to another preferred general characteristic of the invention the mushrooms to be cleaned are subjected to a series of washes by pressure variation and/or bubbling in succession one after the other, where the extract is at least partially used as liquid phase of the suspension of at least some of said washes to become enriched with solutes at each subsequent wash in which it is present.

For example, in the first washing step the liquid phase can also be only a pure solvent, preferably water, which becomes enriched during the washing with solutes and generates a first extract, which participates as liquid phase in all subsequent washes where it becomes enriched.

Further features and advantages of the present invention will become clearer from the following detailed description of preferred embodiments thereof, given for illustrating and not limiting purposes.

According to a first preferred embodiment the starting material used for the process are "boletus" mushrooms in dried state, more preferably in slices and/or crumbs.

The use of dried material allows easy storage which avoids dependence on the seasonality of these wild mushrooms.

Dried mushrooms are placed in suspension in a solvent, preferably water, so as to encourage the soluble elements to come out and the formation of an extract. More preferably, the water has a temperature higher than room temperature so as to accelerate extraction, for example it is between 30°C and 90°C.

During this infusion, a stress is applied to the mixture of water and mushrooms through repeated pressure variations, for example in the form of pressure waves or pulses. The variations are obtained, for example, by lowering the pressure to values below atmospheric pressure alternating with rises to atmospheric pressure and/or to pressure values above atmospheric pressure. This procedure can for the sake of simplicity be called "pulsed vacuum ".

Thereafter a food gas or a mixture of food gases are bubbled through the mixture of water and mushrooms. Preferably, nitrogen gas is used.

The steps of extraction, pressure variation and bubbling take place on the same mixture of water and mushrooms, so that at each subsequent step the extract becomes increasingly enriched with soluble elements of the mushrooms, which by gravity tend to fall to the bottom of the mixture.

It is possible to repeat a desired or programmed number of pressure variations and/or bubbling steps.

After these cleaning steps, which has generated, in addition to the extract, also the exit from the pulp of many insoluble foreign elements, like for example larvae, the extract is separated from them.

It should be observed that the insoluble foreign elements, once they have come out from the pulp through the pressure variations and/or the bubbling, can be separated with any suitable system.

For example, during bubbling said elements and in particular larvae tend to float on the mixture, for which reason they can be eliminated for example by skimming. In addition or alternatively, it is possible to provide for a recirculation circuit that takes the extract from the task in which the suspension is located and takes it back to the same tank, after it has been filtered along the recirculation path. In addition or alternatively, it is possible to use sieving.

The pulp removed of the soluble elements, by means of the extract, and cleaned of insoluble foreign bodies, by means of the expulsion with pressure variations and/or bubbling, may still contain some foreign bodies inside it. This is the case, for example, of larvae fragments.

For this reason, the pulp can be subjected to a further cleaning treatment.

In this subsequent step, the pulp separated from the extract is placed in suspension in another liquid phase, to generate a new solute-poor mixture. The liquid phase this time is an oxygenated water solution. Preferred dilution values of the oxygenated water are, in percentage by weight over the total weight, within the following range [0.3%-15%].

The oxygenated water by reacting causes an expulsion of the residues of larvae or other foreign elements from the pulp. The action is very invasive, but takes place on pulp already deprived, or almost entirely deprived, of the noble components, i.e. the solutes. The expulsion is again promoted more if at least one stressing by pressure variation took place beforehand, so as to have the pores widened.

The sitting in the oxygenated water solution, as well as the expulsion of the foreign elements, also causes the bleaching of the pulp, which up to here had a very uniform brown colour due to it having been in prolonged contact with the extract.

Preferably, the pulp does not all stay in the oxygenated water solution for the same time period, but at least two parts of pulp stay for different times so as to undergo different degrees of bleaching. For example, one part is extracted first to bleach less. In this way, it is possible for example to mimic the colour of the stalks and the colour of the caps of porcini mushrooms. The same result can be obtained, alternatively, by immersing the at least two parts of pulp in a solution with different percentages of oxygenated water. The two techniques can of course by combined with each other, controlling the permanency times.

After bleaching the pulp is redried, for example through a fluid bed dryer. During drying the pulp is repeatedly wetted, for example by spraying, with the extract, so as to regain the solutes and the desired consistency. Of course, this does not exclude the use of other techniques, in addition or as an alternative to spraying, which allow the pulp to be wetted with the extract cyclically during drying. It is easy to obtain a product totally resembling dried mushrooms, for example in slices and/or crumbs or granulate, especially using both the more bleached pulp and the less bleached pulp to mimic the stalks and the caps.

### EXPERIMENTAL EXAMPLE

- amount of mushrooms and water to form the suspension: in proportion of 1 to 10
- temperature of suspension water: room
- parameters of the pulsed vacuum and duration: 5 cycles in 5 minutes
- parameters of the bubbling and duration: continuous bubbling for 5 minutes.
- parameters of the use of oxygenated water and duration: 5% dilution, immersion for 10 minutes.

In these conditions an elimination from inside the pulp of 96% of insoluble foreign elements was obtained.

In general, it should be observed that other types of cleaning treatment of the pulp in addition to the ones indicated are not excluded. Nor is the application of only one or some of the types of washing indicated ruled out.

For example, the programming of the number and type of washes to be applied can depend on an initial analysis of the mushrooms to be treated which establishes the amount and/or type of foreign elements to be eliminated.

This can be done for example through a production line that has an initial analysis station of the mushrooms and a series of cleaning programs able to be activated according to the contamination detected.

The system could also have a station in which each mushroom is analysed and it is sent to sub-lines with different cleaning programs according to its degree of contamination.

It should also be observed that up to here stressing treatments by pressure variation and bubbling treatments have been described, carried out in the same container and on the same mixture of mushrooms and water. This makes it more practical to apply various successive washing steps with pressure variation and/or bubbling. However, this does not rule out less preferred embodiments in which in each wash the pulp and the extract are separated, to constitute a new suspension in new water at the next cycle, in which the extract can be added at least in part. Or it is not ruled out to have washing cycles by pressure variation and/or bubbling that each take place in distinct containers, for example arranged in successive stations of a production line, each containing its own liquid phase for the suspension.

Those skilled in the art will also note that, although a process is described herein that uses dried mushrooms as starting material, it is also possible to start from other states of mushrooms, like for example fresh and/or frozen mushrooms, to the great benefit of the industry in terms of availability on the market and not being restricted by the seasonality of the product.

## Claims

1. Process for cleaning mushrooms intended for human consumption of foreign elements, **characterised in that** it comprises the following steps:
- separation from the mushrooms of the soluble parts through the generation of an extract;
- cleaning the pulp of insoluble foreign elements,
- reconstruction by combining the pulp, removed of soluble elements and cleansed of insoluble elements, with the extract,
where the step of cleaning the pulp takes place at least during and/or after the generation of the extract.

2. Process according to claim 1, **characterised in that** the cleaning step provides for the suspension of the pulp in a liquid medium, and stressing it, when in suspension, through at least one series of pressure variations that cause the foreign elements to come out.

3. Process according to claim 1 or 2, **characterised in that** the cleaning step provides for the suspension of the pulp in a liquid medium and the bubbling of a food gas or of a mixture of food gases, where the bubbling of the gas or of the mixture of gases causes the foreign elements to come out from the pulp in suspension.

4. Process according to any one of the previous claims, **characterised in that** the cleaning step provides for the suspension of the pulp in a solution comprising oxygenated water for a predetermined time, where the reaction of the oxygenated water inside the pulp generates a propulsion effect that causes the foreign elements to come out.

5. Process according to claim 1, **characterised in that** the separation step according to claim 1 is at least partially simultaneous with the cleaning steps according to claim 2 or 3, since said suspension is obtained by placing the mushrooms and/or the pulp to be cleaned in said liquid medium that acts as a solvent to at least partially generate said extract.

6. Process according to claim 5, **characterised in that** said cleaning step comprises said pressure variations according to claim 2 applied before said bubbling according to claim 3.

7. Process according to claim 4, **characterised in that** said suspension of the pulp in a solution comprising oxygenated water takes place at least partially after said separation step according to claim 1.

8. Process according to claim 7, **characterised in that** the pulp is separated from the extract in advance to be placed in suspension in the oxygenated water solution.

9. Process according to claim 4, **characterised in that** at least two parts of pulp removed of solutes are kept in the suspension with oxygenated water for mutually different predetermined times, so as to undergo different amounts of bleaching.

10. Process according to any one of the previous claims, **characterised in that** said reconstruction step comprises the step of subjecting the cleaned pulp to a drying process during which said extract is combined with the pulp.

11. Process according to claim 1, **characterised in that** it provides for an initial step of analysis of the level and/or type of contamination of the starting mushrooms to be cleaned and assigning a number and/or type of washing to them, each coinciding with a cleaning step according to claims 2 or 3 or 4, wherein said number and/or type is dependent on said level of contamination detected, said washing operations are then carried out on said mushrooms to be cleaned.

12. Process according to claim 2 or 3, **characterised in that** said mushrooms to be cleaned are successively subjected to a series of washing operations, each coinciding with a cleaning step according to claim 2 or 3, wherein said extract is at least partially used as liquid phase of the suspension of at least some of said washing operations to become enriched with solutes in each subsequent wash in which it is present.

## Patentansprüche

1. Verfahren zum Reinigen von Pilzen, die für den menschlichen Verzehr gedacht sind, von Fremdelementen, **dadurch gekennzeichnet, dass**
es die folgenden Schritte umfasst:
- Trennen der Pilze von den löslichen Teilen durch Erzeugen eines Extrakts;
- Entfernen von unlöslichen Fremdelementen aus der Pulpe:
- Rekonstruktion durch Vereinen der Pulpe, aus der lösliche Elemente entfernt wurden und die von unlöslichen Elementen gesäubert wurde, mit dem Extrakt,
wobei der Schritt des Reinigens der Pulpe zumindest während und/oder nach der Erzeugung des Extrakts stattfindet.

2. Verfahren nach Anspruch 1, **dadurch gekennzeichnet, dass** der Reinigungsschritt die Suspension der Pulpe in einem flüssigen Medium und das Belasten davon, wenn diese sich in Suspension befindet, mit zumindest einer Reihe von DruckVariationen bereitstellt, die verursachen, dass die Fremdelemente heraustreten.

3. Verfahren nach Anspruch 1 oder 2, **dadurch gekennzeichnet, dass** der Reinigungsschritt die Suspension der Pulpe in einem flüssigen Medium und das Durchperlen eines Lebensmittelgases oder eines Gemischs von Lebensmittelgasen bereitstellt, wobei das Durchperlen des Gases oder des Gemischs von Gasen verursacht, dass die Fremdelemente aus der Pulpe in Suspension heraustreten.

4. Verfahren nach einem der vorstehenden Ansprüche, **dadurch gekennzeichnet, dass** der Reinigungsschritt die Suspension der Pulpe in einer Lösung, umfassend oxigeniertes Wasser, über einen vorbestimmten Zeitraum hinweg bereitstellt, wobei die Reaktion des oxigenierten Wassers innerhalb der Pulpe einen Schubeffekt auslöst, der das Heraustreten der Fremdelemente verursacht.

5. Verfahren nach Anspruch 1, **dadurch gekennzeichnet, dass** der Trennschritt nach Anspruch 1 zumindest teilweise gleichzeitig mit den Reinigungsschritten nach Anspruch 2, 3 erfolgt, da die Suspension durch Platzieren der zu reinigenden Pilze und/oder Pulpe in dem flüssigen Medium erhalten wird, das als Lösungsmittel agiert, um zumindest teilweise den Extrakt zu erzeugen.

6. Verfahren nach Anspruch 5, **dadurch gekennzeichnet, dass** der Reinigungsschritt die Druckvariationen nach Anspruch 2 umfasst, die vor dem Durchperlen nach Anspruch 3 angewendet werden.

7. Verfahren nach Anspruch 4, **dadurch gekennzeichnet, dass** die Suspension der Pulpe in einer Lösung, umfassend oxigeniertes Wasser, zumindest teilweise nach dem Trennschritt nach Anspruch 1 erfolgt.

8. Verfahren nach Anspruch 7, **dadurch gekennzeichnet, dass** die Pulpe vor dem Platzieren in Suspension in der Lösung von oxigeniertem Wasser von dem Extrakt getrennt wird.

9. Verfahren nach Anspruch 4, **dadurch gekennzeichnet, dass** zumindest zwei Teile der Pulpe, die aus den Gelöststoffen entfernt wurden, über einen jeweils unterschiedlichen vorbestimmten Zeitraum hinweg in der Suspension mit dem oxigenierten Wasser gehalten werden, um verschiedene Grade des Bleichens zu durchlaufen.

10. Verfahren nach einem der voranstehenden Ansprüche, **dadurch gekennzeichnet, dass** der Rekonstruktionsschritt den Schritt des Unterziehens der gereinigten Pulpe einem Trocknungsprozess umfasst, während dessen der Extrakt mit der Pulpe vereint wird.

11. Verfahren nach Anspruch 1, **dadurch gekennzeichnet, dass** es einen Anfangsschritt der Analyse des Grades und/oder der Art der Verunreinigung der zu reinigenden Ausgangspilze und das Zuweisen einer Anzahl und/oder einer Art von Waschungen bereitstellt, wobei jede gleichzeitig mit einem Reinigungsschritt nach Anspruch 2 oder 3 oder 4 erfolgt,
wobei die Anzahl und/oder die Art von dem Grad der detektierten Verunreinigung abhängt, wobei die Waschvorgänge dann für die zu reinigenden Pilze durchgeführt werden.

12. Verfahren nach Anspruch 2 oder 3, **dadurch gekennzeichnet, dass** die zu reinigenden Pilze einer aufeinanderfolgenden Reihe von Waschvorgängen unterzogen werden, wobei jeder gleichzeitig mit einem Reinigungsschritt nach Anspruch 2 oder 3 erfolgt, wobei der Extrakt zumindest teilweise als flüssige Phase der Suspension von zumindest mancher der Waschvorgänge verwendet wird, um in jeder darauffolgenden Waschung, in der er vorhanden ist, mit Gelöststoffen angereichert zu werden.

## Revendications

1. Procédé de nettoyage des champignons destinés à la consommation humaine des éléments étrangers, **caractérisé en ce**
**qu'**il comprend les étapes suivantes :
- la séparation des parties solubles des champignons par la génération d'un extrait ;
- le nettoyage des éléments étrangers insolubles de la pulpe ;
- la reconstruction, en mélangeant la pulpe, dépourvue des éléments solubles et nettoyée des éléments insolubles, avec l'extrait,
dans lequel l'étape de nettoyage de la pulpe a lieu au moins pendant et/ou après la génération de l'extrait.

2. Procédé selon la revendication 1, **caractérisé en ce que** l'étape de nettoyage prévoit la mise en suspension de la pulpe dans un milieu liquide et sa mise en contrainte, lors de la mise en suspension, au travers d'au moins une série de variations de pression, provoquant la sortie des éléments étrangers.

3. Procédé selon la revendication 1 ou 2, **caractérisé en ce que** l'étape de nettoyage prévoit la mise en suspension de la pulpe dans un milieu liquide et le barbotage d'un gaz alimentaire ou d'un mélange de gaz alimentaires, dans lequel le barbotage du gaz ou du mélange de gaz fait sortir les éléments étrangers de la pulpe mise en suspension.

4. Procédé selon l'une quelconque des revendications précédentes, **caractérisé en ce que** l'étape de nettoyage prévoit la mise en suspension de la pulpe dans une solution d'eau oxygénée, pendant une durée prédéterminée, dans lequel la réaction de l'eau oxygénée à l'intérieur de la pulpe engendre un effet de propulsion qui fait sortir les éléments étrangers.

5. Procédé selon la revendication 1, **caractérisé en ce que** l'étape de séparation selon la revendication 1 est au moins partiellement simultanée aux étapes de nettoyage selon les revendications 2 et 3, puisque ladite mise en suspension est obtenue en plaçant les champignons et/ou la pulpe à nettoyer dans ledit milieu liquide, qui agit comme solvant pour générer au moins partiellement ledit extrait.

6. Procédé selon la revendication 5, **caractérisé en ce que** ladite étape de nettoyage comprend lesdites variations de pression selon la revendication 2, appliquées avant ledit barbotage selon la revendication 3.

7. Procédé selon la revendication 4, **caractérisé en ce que** ladite mise en suspension de la pulpe dans une solution d'eau oxygénée se produit au moins partiellement après ladite étape de séparation selon la revendication 1.

8. Procédé selon la revendication 7, **caractérisé en ce que** la pulpe est préalablement séparée de l'extrait, puis mise en suspension dans la solution d'eau oxygénée.

9. Procédé selon la revendication 4, **caractérisé en ce que** au moins deux parties de la pulpe dépourvue des solutés sont maintenues dans la suspension avec eau oxygénée pendant des moments prédéterminés mutuellement différents, de sorte à subir différents niveaux de blanchiment.

10. Procédé selon l'une quelconque des revendications précédentes, **caractérisé en ce que** ladite étape de reconstruction comprend l'étape consistant à soumettre la pulpe nettoyée à un processus de séchage au cours duquel ledit extrait est mélangé avec la pulpe.

11. Procédé selon la revendication 1, **caractérisé en ce qu'**il prévoit une première étape d'analyse du niveau et/ou du type de contamination des champignons initiaux à nettoyer, et l'attribution à ceux-ci d'un numéro et/ou d'un type de lavage, chacun coïncidant avec une étape de nettoyage selon la revendication 2, 3 ou 4,
dans lequel ledit numéro et/ou type dépend dudit niveau de contamination détecté, lesdites opérations de lavage sont ensuite effectuées sur lesdits champignons à nettoyer.

12. Procédé selon la revendication 2 ou 3, **caractérisé en ce que** lesdits champignons à nettoyer subissent successivement une série d'opérations de lavage, chacune coïncidant avec une étape de nettoyage selon la revendication 2 ou 3, dans lequel ledit extrait est au moins partiellement utilisé comme phase liquide de la mise en suspension dans au moins certaines des dites opérations de lavage pour s'enrichir en solutés à chaque lavage ultérieur dans lequel il est présent.
